# NEUE EUROPÄISCHE PATENTSCHRIFT

(11) **EP 3 013 889 B2**
(45) Veröffentlichungstag und Bekanntmachung des Hinweises auf die Entscheidung über den Einspruch: **04.03.2020**
(45) Hinweis auf die Patenterteilung: 05.04.2017
(21) Anmeldenummer: 14732894.2
(22) Anmeldetag: 26.06.2014
(51) Int. Cl.: C08G 75/00

(54) **POLYARYLETHERSULFON-POLYMERE (P) MIT REDUZIERTEM LÖSUNGSMITTELGEHALT**
POLYARYLETHERSULFONE POLYMERS (P) WITH REDUCED SOLVENT CONTENT
POLYMÈRES DE POLYARYLÉTHERSULFONE (P) AYANT UNE TENEUR RÉDUITE EN SOLVANT

(30) Priorität: 28.06.2013 EP 13174348
(43) Veröffentlichungstag der Anmeldung: 04.05.2016
(73) Patentinhaber: BASF SE, 67056 Ludwigshafen am Rhein (DE)
(72) Erfinder: WEBER, Martin, 67487 Maikammer (DE); MALETZKO, Christian, 67122 Altrip (DE); STAAL, Bastiaan Bram Pieter, 67117 Limburgerhof (DE); ERBES, Jörg, 76137 Karlsruhe (DE)
(74) Vertreter: Baier, Martin
(86) Internationale Anmeldenummer: PCT/EP2014/063519
(87) Internationale Veröffentlichungsnummer: WO 2014/207106

(56) Entgegenhaltungen:
- EP-A1- 2 000 493
- EP-A1- 2 305 740
- EP-A2- 0 274 098
- EP-A2- 0 447 358
- WO-A1-2011/020823
- DE-A1- 2 403 660
- DE-A1- 4 216 588
- DE-A1- 19 816 955
- GB-A- 1 394 983
- US-A- 5 047 496
- US-A1- 2011 311 816

## Beschreibung

Die vorliegende Erfindung betrifft ein Verfahren zur Herstellung eines Polyarylethersulfon-Polymers (P) mit reduziertem Lösungsmittelgehalt, die nach diesem Verfahren erhältlichen Polyarylethersulfon-Polymere (P), thermoplastische Formmassen, die das Polyarylethersulfon-Polymer (P) enthalten sowie Formteile, die aus den Formmassen hergestellt werden.

Polyarylethersulfon-Polymere (P) gehören zur Gruppe der Hochleistungsthermoplasten und zeichnen sich durch hohe Wärmeformbeständigkeit, gute mechanische Eigenschaften und eine inhärente Flammwidrigkeit aus.

Die Herstellung der Polyarylethersulfon-Polymere (P) ist seit langem bekannt. Die Herstellung der Polyarylethersulfon-Polymere (P) erfolgt dabei im Allgemeinen durch Polykondensation entsprechender aromatischer Dihydroxyverbindungen mit aromatischen Dihalogenverbindungen, wobei die Polykondensation in einem aprotischen polaren Lösungsmittel in Gegenwart von Kaliumkarbonat als Base durchgeführt wird. Die Polyarylethersulfon-Polymere (P) fallen im Herstellungsprozess daher in Form einer Lösung an, die das Polyarylethersulfon-Polymer (P) gelöst in dem aprotischen polaren Lösungsmittel enthält. Zur Isolierung des Polyarylethersulfon-Polymers (P) aus dem aprotischen polaren Lösungsmittel sind im Stand der Technik verschiedene Methoden beschrieben.

DE 1 957 091 beschreibt ein Verfahren zur Herstellung von Polyarylethersulfon-Polymeren (P) bei dem als aprotische polare Lösungsmittel Dimethylsulfoxid, Diethylsulfoxid, Tetramethylensulfoxid, Diphenylsulfon, Dimethylsulfon, Diethylsulfon, Diisopropylsulfon, Hexamethylphosphoramid, Diethylenglykol, Dimethylacetamid, Dimethylformamid oder Nitrobenzol eingesetzt werden. Nach vollendeter Polykondensation wird die erhaltene Polymerlösung zunächst auf Raumtemperatur abgekühlt. Zur Isolierung des Polyarylethersulfon-Polymers (P) wird diese Polymerlösung anschließend langsam in siedendes Wasser gegeben, um das Polymer auszufällen. Das ausgefällte Polymer wird nachfolgend abfiltriert und getrocknet.

Die EP 0 000 361 beschreibt ebenfalls ein Verfahren zur Herstellung von Polyarylethersulfon-Polymeren (P), wobei als aprotisches polares Lösungsmittel N,N-Dimethylformamid, N,N-Dimethylacetamid, N-Methylpyrrolidon, Dimethylsulfoxid, Dimethylsulfon, Sulfolan oder Diphenylsulfon eingesetzt wird. Zur Isolierung des Polyarylethersulfon-Polymers (P) aus der bei der Polykondensation erhaltenen Polymerlösung werden aus der Polymerlösung zunächst anorganische Bestandteile abfiltriert. Die Polymerlösung wird nachfolgend in Wasser ausgefällt. Das ausgefällte Polymer wird abfiltriert und nachfolgend im Vakuum bei 80°C getrocknet.

Auch WO 00/18824 beschreibt ein Verfahren zur Herstellung von Polyarylethersulfon-Polymeren (P). Zur Isolierung des Polymers wird die erhaltene Polymerlösung langsam zu einer Mischung aus Methanol und Wasser im Verhältnis 70:30 gegeben. Die Methanol-Wasser-Lösung wird dabei schnell gerührt. Der erhaltene Polymerniederschlag wird nachfolgend durch Filtration abgetrennt und mit Methanol und Wasser gewaschen. Anschließend wird der Polymerniederschlag im Vakuum getrocknet.

Auch die WO 01/066620 beschreibt ein Verfahren zur Herstellung von Polyarylethersulfon-Polymeren (P). Als aprotisches polares Lösungsmittel wird Sulfolan eingesetzt. Das Polyarylethersulfon-Polymer (P) wird aus der erhaltenen Polymerlösung abgetrennt, indem die Polymerlösung langsam zu einer gekühlten Lösung aus Methanol und Wasser im Verhältnis 70:30 zugegeben wird. Die Methanol-Wasser-Lösung wird dabei bei hohen Geschwindigkeiten gerührt. Der erhaltene Niederschlag wird nachfolgend abfiltriert und im Vakuum getrocknet.

Die WO 2011/020 823 offenbart ein Verfahren zur Herstellung von Polybiphenylsulfon-Polymeren in einem polar aprotischen Lösungsmittel. Dabei wird eine aromatische Dihalogensulfonverbindung mit einem Überschuss einer aromatischen Dihydroxyverbindung umgesetzt. Während oder nach der Reaktion wird ein Metallhydroxid zugegeben. Als polar aprotisches Lösungsmittel ist N-Methylpyrrolidon bevorzugt. Zur Isolierung des Polybiphenylsulfon-Polymers aus der erhaltenen Polymerlösung wird die Lösung zunächst filtriert und das Polymer nachfolgend in einem NMP/Wassergemisch ausgefällt.

Durch die vorstehend beschriebenen Verfahren werden Polyarylethersulfon-Polymere (P) in undefinierter Form erhalten. Durch die Zugabe der Polymerlösung zu Wasser beziehungsweise einem Wasser-Methanol-Gemisch fällt das in der Polymerlösung enthaltene Polyarylethersulfon-Polymer (P) unkontrolliert aus. Dadurch bilden sich Polymerniederschläge in Form von undefinierten Agglomeraten. Diese Polymeragglomerate sind für die Weiterverarbeitung, beispielsweise zu Formmassen oder Formteilen, nicht geeignet. Darüber hinaus weisen die so erhaltenen Polyarylethersulfon-Polymere (P) relativ große Mengen an aprotischem polarem Lösungsmittel auf. Diese aprotischen polaren Lösungsmittel sind folglich auch in Formteilen enthalten, die aus den nach den vorstehend beschriebenen Verfahren erhältlichen Polyarylethersulfon-Polymeren (P) hergestellt werden. Die aprotischen polaren Lösungsmittel können beim Gebrauch der Formteile aus diesen migrieren. Die so erhaltenen Formteile sind daher aus toxikologischer Sicht nicht unbedenklich. Die Formteile sind dabei insbesondere für Lebensmittelanwendungen häufig ungeeignet.

Zur Vermeidung undefinierter Polymeragglomerate beschreibt die DE 3 644 464 ein Verfahren zur Isolierung teilchenförmiger Polyarylethersulfon-Polymere (P). Hierzu werden in einem ersten Schritt aromatische Dihydroxyverbindungen mit aromatischen Dihalogenverbindungen in einem aprotischen polaren Lösungsmittel polykondensiert. Die Polykondensation erfolgt dabei bevorzugt in wasserfreiem N-Methylpyrrolidon in Gegenwart von Kaliumkarbonat. Die nach dem Verfahren gemäß DE 3 644 464 erhaltene Polymerlösung wird nachfolgend durch eine Düse in eine Vielzahl von Flüssigkeitsstrahlen zerlegt. Aus diesen Flüssigkeitsstrahlen wird durch Strahlzerfall eine Vielzahl relativ gleichmäßig großer Tropfen erzeugt. Diese Tropfen werden nachfolgend in ein Fällbad überführt, in dem sich das Polyarylethersulfon-Polymer (P) in partikularer Form, das heißt in Form von Perlen, ausbildet. Als Fällungsbad (Fällungsmittel) wird dabei Wasser oder eine Mischung aus Wasser mit Alkoholen, wie Methanol, Ethanol oder Pentanol eingesetzt. Die so erhaltenen Polyarylethersulfon-Polymer (P)-Perlen werden nachfolgend abfiltriert und getrocknet. Die nach DE 3 644 464 enthaltenen Polyarylethersulfon-Polymere (P) weisen zwar eine relativ definierte Partikelgrößenverteilung auf und sind somit zur Weiterverarbeitung zu Formmassen oder Formteilen geeignet, die Polyarylethersulfon-Polymere (P) weisen jedoch ebenfalls relativ große Mengen an aprotischen polaren Lösungsmitteln auf. Die aus den Polyarylethersulfon-Polymeren (P) gemäß DE 3 644 464 hergestellten Formteile sind daher, insbesondere für Anwendungen im Lebensmittelbereich teilweise nicht geeignet.

Auch die EP 2305740 beschreibt ein Verfahren zur Herstellung von partikularen Polyarylethersulfon-Polymeren (P). Die Polykondensation wird dabei in N-Methylpyrrolidon, N-Ethylpyrrolidon, Dimethylformamid, Dimethylsulfoxid, 1,2-Dichlorbenzol, Sulfolan oder Hexamethylphosphorsäuretriamid durchgeführt. Die bei der Polykondensation erhaltene Polymerlösung aus Polyarylethersulfon-Polymer (P) und aprotischem polaren Lösungsmittel wird nachfolgend einem Vereinzelungsschritt zur Bildung von Tropfen unterzogen. Die so erhaltenen Tropfen werden nachfolgend in ein bewegtes Fällbad zur Ausbildung von Polymerpartikeln überführt. Hierdurch werden Polymerpartikel mit einem Durchmesser im Bereich von 0,5 bis 4 mm erhalten. Als Fällbad werden Wasser und/oder 1- oder 2-wertige aliphatische Alkohole mit 1 bis 6 Kohlenstoffatomen eingesetzt. Die Polymerlösung weist während des Vereinzelungsschritts hohe Temperaturen auf, wobei Temperaturen im Bereich von 150 bis 220 °C besonders bevorzugt sind. Gemäß der Lehre von EP 2 305 740 muss das Fällbad zudem eine Wassertemperatur von mindestens 80 °C aufweisen. Die gemäß EP 2 305 740 erhaltenen Polyarylethersulfon-Polymer (P)-Partikel werden nachfolgend, beispielsweise durch Filtration abgetrennt. Auch die gemäß EP 2 305 740 erhaltenen Polyarylethersulfon-Polymere (P) weisen relativ große Mengen an aprotischen polaren Lösungsmitteln auf. Die gemäß EP 2 305 740 erhaltenen Polyarylethersulfon-Polymere (P) sind daher zur Herstellung von Formteilen, insbesondere für Lebensmittelanwendungen, ungeeignet.

Der vorliegenden Erfindung liegt somit die Aufgabe zugrunde, ein Verfahren zur Herstellung von Polyarylethersulfon-Polymeren (P) bereitzustellen, das Polyarylethersulfon-Polymere (P) zugänglich macht, die einen reduzierten Gehalt an aprotischen polaren Lösungsmitteln aufweisen. Die Polyarylethersulfon-Polymere (P) sollen auch zur Herstellung von Formteilen für Lebensmittelanwendungen geeignet sein. Das erfindungsgemäße Verfahren und die dadurch erhältlichen Polyarylethersulfon-Polymere (P) sollen die Nachteile der im Stand der Technik beschriebenen Verfahren und der daraus erhältlichen Polymere nicht oder nur in vermindertem Maße aufweisen. Das erfindungsgemäße Verfahren soll dabei einfach, möglichst fehlerunanfällig und kostengünstig durchführbar sein.

Diese Aufgabe wird erfindungsgemäß gelöst durch ein Verfahren zur Herstellung eines Polyarylethersulfon-Polymers (P) umfassend die folgenden Schritte:
(I) Bereitstellen einer Lösung (PL), die das Polyarylethersulfon-Polymer (P) und ein aprotisches polares Lösungsmittel (L) enthält,
(II) Vereinzeln der Lösung (PL) zu Tropfen,
(III) Überführen der Tropfen in ein Fällbad (F), das Wasser enthält, wodurch das Polyarylethersulfon-Polymer (P) in partikularer Form erhalten wird, und
(IV) Abtrennen des Polyarylethersulfon-Polymers
wobei die Lösung (PL) in Verfahrensschritt (II) eine Temperatur im Bereich von 50 bis < 80 °C aufweist,
wobei die Bereitstellung der Lösung (PL) gemäß Verfahrensschritt (I):
(i) die Umsetzung einer Komponente (a1), bestehend aus mindestens einer aromatischen Dihydroxyverbindung und der Komponente (a2), bestehend aus mindestens einer aromatischen Sulfonverbindung mit zwei Halogensubstituenten, wobei die Komponente (a1) 4,4'-Dihydroxybiphenyl umfasst und wobei das molare Verhältnis der Komponenten (a1) zu (a2) im Bereich von 1,005 bis 1,2 liegt und wobei die Umsetzung in einem aprotischen polaren Lösungsmittel (L) in Gegenwart einer Karbonatverbindung (C) durchgeführt wird, wodurch die Lösung (PL) erhalten wird, umfasst,
wobei die Komponente (a1) mindestens 80 Gew.-% 4,4'-Dihydroxybiphenyl enthält, bezogen auf das Gesamtgewicht der Komponente (a1),
wobei die Komponente (a2) mindestens ein Dihalogendiphenylsulfon ist, ausgewählt aus der Gruppe bestehend aus 4,4'-Dichlordiphenylsulfon und 4,4'-Difluordiphenylsulfon,
wobei das aprotische polare Lösungsmittel (L) Sulfolan ist, wobei das Fällbad (F) mindestens 70 Gew.-% Wasser enthält, bezogen auf das Gesamtgewicht der flüssigen Bestandteile des Fällbades und
wobei in Verfahrensschritt (II) Tropfen mit einer Größe im Bereich von 0,5 bis 4 mm hergestellt werden.

Es wurde überraschend festgestellt, dass mit dem erfindungsgemäßen Verfahren Polyarylethersulfon-Polymere (P) erhalten werden, die einen gegenüber den im Stand der Technik beschriebenen Polyarylethersulfon-Polymeren (P) deutlich reduzierten Gehalt an aprotischem polarem Lösungsmittel (L) aufweisen. Die nach dem erfindungsgemäßen Verfahren erhältlichen Polyarylethersulfon-Polymere (P) weisen lediglich Restmengen an aprotischem polarem Lösungsmittel (L) im Bereich von 10 bis 300 Gew.-ppm auf, bezogen auf das Gesamtgewicht des bei dem Verfahren erhaltenen Polyarylethersulfon-Polymers (P). Dies ist insofern überraschend, als dass handelsübliche Verkaufsprodukte teilweise einen Restgehalt an aprotischem polarem Lösungsmittel im Bereich von 2000 Gew.-ppm aufweisen.

### (I) Bereitstellung der Lösung (PL)

Die Bereitstellung einer Lösung (PL), die das Polyarylethersulfon-Polymer (P) und ein aprotisches polares Lösungsmittel (L) enthält, kann auf verschiedenen Wegen erfolgen und ist dem Fachmann an sich bekannt. In einer Ausführungsform kann das Polyarylethersulfon-Polymer (P) in einem vorgelagerten Schritt hergestellt und isoliert werden. Das isolierte Polyarylethersulfon-Polymer (P) kann nachfolgend in einem aprotischen polaren Lösungsmittel (L) aufgelöst werden, um die Lösung (PL) bereitzustellen. In dieser Ausführungsform stellt das erfindungsgemäße Verfahren somit ein Reinigungsverfahren dar, mit dem Polyarylethersulfon-Polymere (P) hergestellt werden, die einen verminderten Gehalt an aprotischem polarem Lösungsmittel aufweisen. Es ist auch möglich, gemäß Verfahrensschritt (I) ein Polyarylethersulfon-Polymer (P) durch Polykondensation in einem aprotischen polaren Lösungsmittel (L) herzustellen. In dieser Ausführungsform wird gemäß Verfahrensschritt (I) das Polyarylethersulfon-Polymer (P) durch Polykondensation in einem aprotischen polaren Lösungsmittel (L) in Gegenwart einer Karbonatverbindung (C) hergestellt, wobei nach der Polykondensation direkt eine Lösung (PL) erhalten wird, die das Polyarylethersulfon-Polymer (P) und ein aprotisches polares Lösungsmittel (L) enthält. Diese Variante ist bevorzugt.

Unter dem Begriff "Polyarylethersulfon-Polymer (P)" werden erfindungsgemäß genau ein Polyarylethersulfon-Polymer (P) als auch Mischungen von zwei oder mehreren Polyarylethersulfon-Polymeren (P) verstanden.

Die Bereitstellung der Lösung (PL) umfasst gemäß Verfahrensschritt (I):
(i) die Umsetzung einer Komponente (a1), bestehend aus mindestens einer aromatischen Dihydroxyverbindung und der Komponente (a2), bestehend aus mindestens einer aromatischen Sulfonverbindung mit zwei Halogensubstituenten, wobei die Komponente (a1) 4,4'-Dihydroxybiphenyl umfasst und wobei das molare Verhältnis der Komponenten (a1) zu (a2) im Bereich von 1,005 bis 1,2 liegt und wobei die Umsetzung in einem aprotischen polaren Lösungsmittel (L) in Gegenwart einer Karbonatverbindung (C) durchgeführt wird, wodurch die Lösung (PL) erhalten wird.

Bei dieser Ausführungsform wird in Verfahrensschritt (I) direkt die Lösung (PL) erhalten. Diese kann nachfolgend gemäß Verfahrensschritt (II) zu Tropfen vereinzelt werden. In einer bevorzugten Ausführungsform werden aus der gemäß Verfahrensschritt (i) erhaltenen Lösung (PL) vor Verfahrensschritt (II) die bei der Polykondensation gebildeten anorganischen Salze aus der Lösung (PL) abgetrennt. Für den Fall, dass die Lösung (PL) nach der Polykondensation noch Karbonatverbindung (C) enthält, wird diese bevorzugt ebenfalls abgetrennt. Dies kann beispielsweise durch Filtration erfolgen. Aus der Karbonatverbindung (C) bilden sich während der Polykondensation die entsprechenden Metallhalogenide.

Ein weiterer Gegenstand der vorliegenden Erfindung ist somit ein Verfahren, bei dem die gemäß Verfahrensschritt (i) erhaltene Lösung (PL) vor der Vereinzelung gemäß Verfahrensschritt (II) einer Filtration unterzogen wird.

Bei dieser Ausführungsform umfasst die Komponente (a1) 4,4'-Dihydroxybiphenyl. In dieser Ausführungsform wird als Polyarylethersulfon-Polymer ein Polybiphenylsulfon-Polymer (P1) erhalten. Unter Polybiphenylsulfon-Polymer (P1) werden erfindungsgemäß Polyarylethersulfone verstanden, welche 4,4'-Dihydroxybiphenyl als Monomereinheit umfassen. Folglich umfasst der Begriff Polybiphenylsulfon-Polymer (P1) unter anderem Polybiphenylsulfon-Homo- und Copolymere. Ein Polybiphenylsulfon-Polymer (P1), welches ausschließlich aus den Monomereinheiten 4,4'-Dihalogendiphenylsulfon und 4,4'-Dihydroxybiphenyl aufgebaut ist, wird als Polybiphenylsulfon (PPSU) bezeichnet.

Im Rahmen der vorliegenden Erfindung wird zur Charakterisierung der Struktur der Polybiphenylsulfon-Polymere (P1) auf die eingesetzten Monomereinheiten Bezug genommen. Es ist für den Fachmann offensichtlich, dass die Monomereinheiten im Polymer in umgesetzter Form vorliegen und dass die Umsetzung der Monomereinheiten durch nucleophile aromatische Polykondensation unter rechnerischer Abspaltung einer Einheit Halogenwasserstoff als Abspaltungsgruppe erfolgt. Folglich ist die Struktur des resultierenden Polymers unabhängig von der genauen Art der Abspaltungsgruppe.

Erfindungsgemäß besteht Komponente (a1) aus mindestens einer aromatischen Dihydroxyverbindung und umfasst mindestens 80 Gew.-% 4,4'-Dihydroxybiphenyl, bezogen auf das Gesamtgewicht der Komponente (a1). Darüber hinaus kann Komponente (a1) insbesondere folgende Verbindungen umfassen:
- Dihydroxybenzole, insbesondere Hydrochinon und Resorcin;
- Dihydroxynaphthaline, insbesondere 1,5-Dihydroxynaphthalin, 1,6-Dihydroxynaphthalin, 1,7- Dihydroxynaphthalin, und 2,7- Dihydroxynaphthalin;
- Andere Dihydroxybiphenyle als 4,4'-Biphenol, insbesondere 2,2'-Biphenol;
- Bisphenylether, insbesondere Bis(4-hydroxyphenyl)ether und Bis(2-hydroxyphenyl)ether;
- Bisphenylpropane, insbesondere 2,2-Bis(4-hydroxyphenyl)propan, 2,2-Bis(3-methyl-4-hydroxyphenyl)propan, und 2,2-Bis(3,5-dimethyl-4-hydroxyphenyl)propan;
- Bisphenylmethane, insbesondere Bis(4-hydroxyphenyl)methan
- Bisphenylcyclohexane, insbesondere Bis(4-hydroxyphenyl)-2,2,4-trimethylcyclohexan;
- Bisphenylsulfone, insbesondere Bis(4-hydroxyphenyl)sulfon;
- Bisphenylsulfide, insbesondere Bis(4-hydroxyphenyl)sulfid;
- Bisphenylketone, insbesondere Bis(4-hydroxyphenyl)keton;
- Bisphenylhexafluoropropane, insbesondere 2,2-Bis(3,5-dimethyl-4-hydroxyphenyl)hexafluoropropan; und
- Bisphenylfluorene, insbesondere 9,9-Bis(4-hydroxyphenyl)fluoren.

Die Komponente (a1) enthält mindestens 80 Gew.-% und insbesondere mindestens 95 Gew.-% 4,4'-Dihydroxybiphenyl, jeweils bezogen auf das Gesamtgewicht der Komponente (a1). Ganz besonders bevorzugt besteht die Komponente (a1) aus 4,4'-Dihydroxybiphenyl.

Die Komponente (a2), 4,4'-Dichlordiphenylsulfon und/oder 4,4'-Difluordiphenylsulfon sind besonders bevorzugt. Ganz besonders bevorzugt ist 4,4'-Dichlordiphenylsulfon.

Die Umsetzung von 4,4'-Dihydroxybiphenyl als Komponente (a1) und 4,4'-Dihalogendiphenylsulfon als Komponente (a2), aus der Polybiphenylsulfon Polymer (P1) (PPSU) als Produkt resultiert, ist insbesondere bevorzugt.

Gemäß Schritt (i) der vorliegenden Erfindung umfasst die Bereitstellung der Lösung (PL) die Umsetzung der Komponente (a2) mit einem molaren Überschuss der Komponente (a1) in einem aprotischen polaren Lösungsmittel (L).

Die Umsetzung der Komponenten (a1) und (a2) zu einem Polyarylethersulfon-Polymer (P), bevorzugt zu einem Polybiphenylsulfon-Polymer (P1), ist dem Fachmann in Bezug auf die Temperatur, das aprotische polare Lösungsmittel (L) und die Zeitdauer an sich bekannt. Die Umsetzung der Ausgangsverbindungen (a1) und (a2) wird bei einer Temperatur von 80 bis 250°C, bevorzugt 100 bis 220°C durchgeführt, wobei die Obergrenze der Temperatur durch den Siedepunkt des Lösungsmittels begrenzt wird.

Die Umsetzung erfolgt vorzugsweise in einem Zeitintervall von 2 bis 12 h, insbesondere von 3 bis 8 h.

Das molare Verhältnis der Komponenten (a1) zu (a2) beträgt vorzugsweise von 1,005 bis 1,2, insbesondere von 1,005 bis 1,1. In einer besonders bevorzugten Ausführungsform beträgt das molare Verhältnis der Komponenten (a1) zu (a2) von 1,005 bis 1,08, insbesondere von 1,01 bis 1,05, ganz besonders bevorzugt von 1,015 bis 1,04. Hierdurch lässt sich das Molekulargewicht besonders effektiv steuern und kontrollieren, unter gleichzeitig vorteilhafter Auswirkung auf den resultierenden Gehalt an polymergebundenem Chlor.

Unter Umsetzung der Komponenten (a1) und (a2) ist die Polykondensation unter Bildung eines Polyarylethersulfon-Polymers (P), bevorzugt eines Polybiphenylsulfon-Polymers (P1) zu verstehen.

Gemäß Verfahrensschritt (i) der vorliegenden Erfindung erfolgt die Umsetzung der Komponenten (a1) und (a2) in Sulfolan.

Es wurde überraschenderweise gefunden, dass ein besonders niedriger Gehalt an polymergebundenem Chlor gefunden wird, wenn als aprotisches polares Lösungsmittel (L) Sulfolan verwendet wird. Sulfolan trägt gleichzeitig zu einem hohen Umsatz der Komponenten (a1) und (a2) bei, da die Reaktion der erfindungsgemäß zum Einsatz kommenden Monomere besonders effizient verläuft.

Die Umsetzung der Komponenten (a1) und (a2) erfolgt vorzugsweise in Gegenwart einer Karbonatverbindung (C), um die Reaktivität gegenüber den Halogensubstituenten der Ausgangsverbindungen (a2) zu erhöhen. Es ist bevorzugt ausgehend von den vorgenannten aromatischen Dihydroxyverbindungen (a1) durch Zugabe einer Karbonatverbindung (C) ihre Dikalium- oder Dinatriumsalze herzustellen und mit der Komponente (a1) zur Reaktion zu bringen. Geeignete Karbonatverbindungen (C) sind dem Fachmann bekannt.

Bevorzugte Karbonatverbindungen (C) sind Alkalimetallkarbonate. Die Kombination aus der Verwendung von Alkalimetallcarbonaten und der anspruchsgemäßen Durchführung des Verfahrens führt zu besonders günstigen Eigenschaften in Bezug auf die Eigenfarbe, mechanische Eigenschaften und Gehalt an polymergebundenem Chlor, und dem Gehalt an Sulfolan.

Vorzugsweise sind die Karbonatverbindungen (C) wasserfrei. Geeignete Karbonatverbindungen (C) sind insbesondere wasserfreies Alkalikarbonat, vorzugsweise Natrium-, Kaliumkarbonat oder Mischungen davon, wobei Kaliumcarbonat ganz besonders bevorzugt ist, insbesondere Kaliumkarbonat mit einer volumengewichteten mittleren Teilchengröße von weniger als 120 Mikrometer, bestimmt mit einem Partikelgrößenmessgerät in einer Suspension in einer Mischung aus Chlorbenzol/Sulfolan (60/40 Gewichtsanteil).

Es hat sich zudem als vorteilhaft herausgestellt, im Rahmen von Schritt (i) die Menge des Polybiphenylsulfon-Polymers (P1) bezogen auf das Gesamtgewicht der Lösung (PL) von 10 bis 70 Gew.-%, vorzugsweise von 10 bis 35 Gew.-% einzustellen.

In einer bevorzugten Ausführungsform wird die Umsetzung gemäß Schritt (i) in Gegenwart mindestens einer aromatischen organischen Monochlorverbindung als Komponente (a3) durchgeführt.

Es besteht die Vorstellung, dass die aromatische organische Monochlorverbindung als Kettenregler fungiert. Vorzugsweise weist die aromatische organische Monochlorverbindung eine ähnliche Reaktivität im Rahmen der Umsetzung in Schritt (i) auf wie die Komponente (a2).

Vorzugsweise ist die Komponente (a3) ein aromatisches Monochlorsulfon, insbesondere Monochlordiphenylsulfon. In einer bevorzugten Ausführungsform wird der Überschuss der Komponente (a1) durch die organische Monochlorverbindung (a3) ausgeglichen, welche eine unter den Bedingungen der Umsetzung der Komponenten (a1) und (a2) reaktive Chlorgruppe enthält.

In einer weiteren bevorzugten Ausführungsform erfolgt im Anschluss an die Umsetzung gemäß Schritt (i) gemäß Schritt (ii) eine weitere Umsetzung mit mindestens einer aliphatischen organischen Halogenverbindung. Hierdurch werden reaktive Hydroxy-Endgruppen des gemäß Schritt (i) erhaltenen Polyarylethersulfon-Polymers (P) weiter umgesetzt und so ein Aufbau der Polymerkette bei späterer thermischer Belastung verhindert.

Bevorzugte aliphatische organische Halogenverbindungen sind Alkylhalogenide, insbesondere Alkylchloride, mit linearen oder verzweigten Alkylgruppen mit von 1 bis 10 Kohlenstoffatomen, insbesondere primäre Alkylchloride, besonders bevorzugt Methylhalogenide, insbesondere Methylchlorid.

Die Umsetzung gemäß Schritt (ii) wird vorzugsweise bei einer Temperatur von 90° bis 160°C, insbesondere von 100°C bis 150°C durchgeführt. Die Zeitdauer kann über einen weiten Zeitraum variieren und beträgt üblicherweise mindestens 5 Minuten, insbesondere mindestens 15 Minuten. Vorzugsweise beträgt die Zeitdauer der Umsetzung gemäß Schritt (ii) von 15 Minuten bis 8 Stunden, insbesondere von 30 Minuten bis 4 Stunden.

Die Zugabe der aliphatischen organischen Halogenverbindung kann über verschiedene Methoden erfolgen. Darüber hinaus kann die aliphatische organische Halogenverbindung stöchiometrisch oder im Überschuss zugegeben werden, wobei der Überschuss beispielsweise bis zu 5-fach sein kann. In einer bevorzugten Ausführungsform erfolgt die Zugabe der aliphatischen organischen Halogenverbindung kontinuierlich, insbesondere durch kontinuierliche Zuführung als Gasstrom.

Gegenstand der vorliegenden Erfindung ist somit auch ein Verfahren zur Herstellung von Polyarylethersulfon-Polymeren (P), bei dem die Bereitstellung der Lösung (PL) gemäß Verfahrensschritt (I) die folgenden Schritte umfasst:
(i) Umsetzung einer Komponente (a1), bestehend aus mindestens einer aromatischen Dihydroxyverbindung und der Komponente (a2), bestehend aus mindestens einer aromatischen Sulfonverbindung mit zwei Halogensubstituenten, wobei die Komponente (a1) 4,4'-Dihydroxybiphenyl umfasst und wobei das molare Verhältnis der Komponente (a1) zu (a2) im Bereich von 1,005 bis 1,2 liegt und wobei die Umsetzung in einem aprotischen polaren Lösungsmittel (L) in Gegenwart einer Karbonatverbindung (C) durchgeführt wird, wodurch ein Polymer (Pr) erhalten wird und
(ii) Umsetzen des Polymers (Pr) mit einem Alkylchlorid, wodurch die Lösung (PL) erhalten wird.

Es hat sich als vorteilhaft erwiesen, in Anschluss an Schritt (i) bzw. Schritt (ii) eine Filtration der Lösung (PL) durchzuführen. Hierdurch wird der bei der Polykondensation gebildete Salzanteil sowie eventuell gebildete Gelkörper entfernt.

Weiterhin Gegenstand der vorliegenden Erfindung ist ein Verfahren, bei dem die Bereitstellung der Polymerlösung (PL) als Verfahrensschritt (iii) zusätzlich einen Filtrationsschritt umfasst.

Die in Verfahrensschritt (I) bereitgestellte Lösung (PL) weist vorzugsweise 10 bis 35 Gew.-%, bevorzugt 15 bis 30 Gew.-%, des Polyarylethersulfon-Polymers (P) auf bezogen auf das Gesamtgewicht der Lösung (PL).

Gegenstand der vorliegenden Erfindung ist somit auch ein Verfahren bei dem die Lösung (PL) 10 bis 35 Gew.-% des Polyarylethersulfon-Polymers (P) enthält, bezogen auf das Gesamtgewicht der Lösung (PL).

Der Gehalt des Polyarylethersulfon-Polymers (P) kann, wie vorstehend beschrieben, durch Auflösen eines Polyarylethersulfon-Polymers (P) in Sulfolan eingestellt werden, welches in einem vorgelagerten Schritt hergestellt wurde. Bevorzugt wird der Gehalt an Polyarylethersulfon-Polymer (P) in der Lösung (PL) jedoch gemäß Verfahrensschritt (i), (ii) bzw. (iii) eingestellt. Die bei dieser Herstellung erhaltene Lösung (PL) kann dabei direkt den vorstehend beschriebenen Gehalt an Polyarylethersulfon-Polymer (P) enthalten. Es ist jedoch auch möglich, gemäß Verfahrensschritt (i), (ii) bzw. (iii) zunächst eine Lösung (PL) herzustellen, die einen höheren Gehalt an Polyarylethersulfon-Polymer (P) enthält. In diesem Fall wird die Lösung (PL) durch Zugabe von weiterem Sulfolan verdünnt, um die vorstehend beschriebene Konzentration einzustellen.

Die in Verfahrensschritt (II) eingesetzte Lösung (PL) kann neben dem aprotischen polaren Lösungsmittel (L) und dem Polyarylethersulfon-Polymer (P) gegebenenfalls weitere Substanzen enthalten. Bevorzugt besteht die Lösung (PL) jedoch im Wesentlichen aus Sulfolan und dem Polyarylethersulfon-Polymer (P). Unter "besteht im Wesentlichen aus" wird erfindungsgemäß verstanden, dass die Lösung (PL) maximal 5 Gew.-%, bevorzugt maximal 3 Gew.-%, besonders bevorzugt maximal 1 Gew.-% und insbesondere bevorzugt maximal 0,5 Gew.-% weiterer Substanzen enthält, wobei die Gew.-%-Angaben jeweils auf das Gesamtgewicht der Lösung (PL) bezogen sind.

Unter "aprotisch" wird erfindungsgemäß verstanden, dass die eingesetzten Lösungsmittel (L) keine funktionellen Gruppen aufweisen, aus denen ein Proton (H⁺) abgespalten werden kann.

Unter "polar" werden erfindungsgemäß Lösungsmittel verstanden, deren elektrostatischer Faktor größer 200 * 10⁻³⁰ Cm ist. Der elektrostatische Faktor (auch als EF bezeichnet) ist definiert als das Produkt der relativen Dielektrizitätskonstante εᵣ und dem Dipolmoment µ (siehe beispielsweise C. Reichardt "Solvents and Solvent Effects in organic Chemistry" 4. Auflage, Wiley-VCH Verlag GmbH & Co. KG, Weinheim 2011, Kap. 3.2. S. 81).

Die Lösung (PL) weist in Verfahrensschritt (II) eine Temperatur im Bereich von 50 bis < 80 °C auf. In einer Ausführungsform wird diese Temperatur bereits in Verfahrensschritt (I) eingestellt, so dass am Ende von Verfahrensschritt (I) die Lösung (PL) ebenfalls eine Temperatur im Bereich von 50 bis < 80 °C aufweist. Hierzu kann die Lösung (PL) beispielsweise durch einen Thermostaten temperiert werden. Falls die Bereitstellung der Lösung (PL) nach Verfahrensvariante (i), (ii) beziehungsweise (iii) durchgeführt wird, kann die Einstellung der Temperatur beispielsweise auch durch Zugabe von weiterem aprotischen polaren Lösungsmittel (L) erfolgen.

### (II) Vereinzeln der Lösung (PL) zu Tropfen

Die gemäß Verfahrensschritt (I) bereitgestellte Lösung (PL) wird in Verfahrensschritt (II) zu Tropfen vereinzelt. Die Vereinzelung von Lösungen zu Tropfen ist dem Fachmann prinzipiell bekannt. Hierzu können alle bekannten Verfahren zur Herstellung von Tropfen aus einer Lösung eingesetzt werden. Für das erfindungsgemäße Verfahren ist in Verfahrensschritt (II) in erste Linie die Temperatur der Lösung (PL) entscheidend. In zweiter Linie ist die Konzentration des Polyarylethersulfon-Polymers (P) in der Lösung (PL) ausschlaggebend.

Die Lösung (PL) weist in Verfahrensschritt (II) vorzugsweise 15 bis 35 Gew.-%, bevorzugt 15 bis 30 Gew.-%, des Polyarylethersulfon-Polymers (P) auf, bezogen auf das Gesamtgewicht der Lösung (PL).

Die Lösung (PL) weist in Verfahrensschritt (II) im Allgemeinen eine Temperatur im Bereich von 50 bis < 80 °C, bevorzugt im Bereich von 50 bis 79°C, besonders bevorzugt im Bereich von 50 bis 78°C und insbesondere im Bereich von 50 bis 75°C auf.

Bevorzugt erfolgt die Vereinzelung der Lösung (PL) zu Tropfen gemäß Verfahrensschritt (II) durch Strahlzerfall. Diese Technologie ist prinzipiell bekannt und beispielsweise in der EP 2 305 740 bzw. der DE 36 44 464 beschrieben.

In einer bevorzugten Ausführungsform wird in Verfahrensschritt (II) die Lösung (PL) mindestens einer Düse zugeführt. Aus dieser Düse tritt die Lösung (PL) in Form eines Flüssigkeitsstrahls aus. Aus diesem Flüssigkeitsstrahl bilden sich durch Strahlzerfall gleichmäßig große Tropfen. Dies kann zum Beispiel durch Vorsehen einer ausreichenden Wegstrecke zwischen dem Austritt des Flüssigkeitsstrahls aus der Düse und dem Eintritt in das Fällbad (F) in Verfahrensschritt (III) erfolgen. Nach Austritt der Lösung (PL) aus der Düse in Form eines Flüssigkeitsstrahls bilden sich nach einer gewissen Wegstrecke Wellen, die zum Zerfall des Flüssigkeitsstrahls in gleichgroße Tropfen führen. Dieser Vorgang wird auch als Strahlzerfall bezeichnet. Eine andere Möglichkeit für die technische Durchführung ist der gesteuerte Strahlzerfall. Hierzu wird die Düse in Schwingungen versetzt, oder die Lösung (PL) wird in Schwingungen versetzt und durch eine feststehende Düse geleitet. Das Versetzen der Düse in Schwingungen kann longitudinal oder transversal erfolgen. Zur Erzeugung longitudinaler Schwingungen kann die Düse zum Beispiel an einer Membran befestigt werden. Diese Membran wird über einen Schwinger mit Hilfe eines Tongenerators in longitudinale Schwingungen versetzt. Anstelle des Tongenerators kann auch ein piezoelektrischer Wandler eingesetzt werden. Transversale Schwingungen werden im Allgemeinen mit Vibratoren erzeugt. Eine andere Möglichkeit des Strahlzerfalls ist das Pulsieren der Flüssigkeit in einer feststehenden Düse, zum Beispiel durch einen Oszillator. Dabei durchläuft die Lösung (PL) eine von einem Oszillator betriebene Vibrationskammer und zerfällt beim Austritt aus der Düse.

Die Frequenz der Schwingungen bzw. Vibrationen liegt im Allgemeinen im Bereich von 30 bis 1000 s⁻¹, bevorzugt im Bereich von 50 bis 800 s⁻¹. Durch die Anwendung solcher periodischer Störungen ist es möglich, die Wegstrecke zwischen dem Austritt der Lösung (PL) aus der Düse und dem Eintritt in das Fällbad (F) zu verkürzen, ohne dass die Gleichmäßigkeit der Tropfengröße verschlechtert wird. Aus diesem Grund kann die zwischen dem Austritt aus der Düse und dem Eintritt in das Fällbad (F) liegende Wegstrecke (= Fallhöhe) in weiten Bereichen variiert werden.

Im Allgemeinen liegen die Fallhöhen im Bereich von 0,1 bis 10 m, bevorzugt 0,1 bis 2 m, insbesondere bevorzugt im Bereich von 0,2 bis 1,5 m. Es versteht sich von selbst, dass in Verfahrensschritt (II) genau eine Düse eingesetzt werden kann, darüber hinaus ist es auch möglich eine Vielzahl von Düsen einzusetzen, beispielsweise 2 bis 100 Düsen.

Als bevorzugte Düsen werden Kapillaren mit einem Durchmesser von 0,1 bis 2 mm, insbesondere von 0,3 bis 1 mm, bei einem Durchsatz der Lösung (PL) von 10 bis 3000 g pro Stunde, insbesondere im Bereich von 400 bis 2000 g pro Stunde und pro Kapillare bzw. pro Düse eingesetzt. Der Druck vor der Kapillare bzw. Düse liegt im Allgemeinen im Bereich von 0,1 bis 8 bar, insbesondere im Bereich von 0,5 bis 3 bar. In den meisten Fällen reicht es aus, den Behälter, der mit der Lösung (PL) befüllt ist, auf ein etwas höheres Niveau als die Düse bzw. Kapillare anzubringen und den hydrostatischen Druck auszunutzen. Mit dem erfindungsgemäßen Verfahrensschritt (II) werden Tropfen mit einer Größe im Bereich von 0,5 bis 4 mm, bevorzugt im Bereich von 1 bis 3 mm, besonders bevorzugt 1,5 bis 2 mm, hergestellt.

Wie vorstehend ausgeführt, ist in Verfahrensschritt (II) in erster Linie die Temperatur der Lösung (PL) und in zweiter Linie die Konzentration des Polyarylethersulfon-Polymers (P) in der Lösung (PL) ausschlaggebend. Als Bezugspunkt für die Temperatur und die Konzentration der Lösung (PL) wird dabei bevorzugt der Austritt der Lösung (PL) aus der Düse bzw. den Düsen gewählt.

Gegenstand der vorliegenden Erfindung ist somit auch ein Verfahren, bei dem die in Verfahrensschritt (I) bereitgestellte Lösung (PL) in Verfahrensschritt (II) mindestens einer Düse zugeführt wird und nach Austritt aus der Düse durch Strahlzerfall in Tropfen vereinzelt wird.

Bevorzugt weist die Lösung (PL) beim Austritt aus der Düse eine Temperatur im Bereich von 50 bis < 80 °C, bevorzugt im Bereich von 50 bis 79 °C, besonders bevorzugt im Bereich von 50 bis 78 °C und insbesondere im Bereich von 50 bis 75°C auf. In einer weiteren bevorzugten Ausführungsform weist die Lösung (PL) beim Austritt aus der Düse 15 bis 35 Gew.-%, bevorzugt 15 bis 30 Gew.-%, des Polyarylethersulfon-Polymers (P) auf, bezogen auf das Gesamtgewicht der Lösung (PL).

### (III) Überführen der Tropfen in ein Fällbad (F)

Die Tropfen, die in Verfahrensschritt (II) gebildet wurden, werden in Verfahrensschritt (III) in ein Fällbad (F) überführt. Das Fällbad (F) enthält Wasser und gegebenenfalls Alkohole (ROH) mit 1 bis 8 Kohlenstoffatomen. Als Alkohole sind beispielsweise Methanol, Ethanol, Propanol, Isopropanol, n-Butanol und Butanolisomere, n-Pentanol und Pentanolisomere sowie n-Hexanol und Hexanolisomere geeignet.

Das Fällbad (F) enthält mindestens 70 Gew.-% Wasser, mehr bevorzugt mindestens 80 Gew.-% Wasser und insbesondere bevorzugt mindestens 90 Gew.-% Wasser, jeweils bezogen auf das Gesamtgewicht der flüssigen Bestandteile des Fällbads (F).

Das Fällbad (F) weist im Allgemeinen eine Temperatur im Bereich von 5 bis 50 °C auf, bevorzugt eine Temperatur von 5 bis 35 °C und insbesondere bevorzugt eine Temperatur von 10 bis 30 °C.

Das Polyarylethersulfon-Polymer (P) ist in dem Fällbad (F) nicht löslich. Hierdurch bilden sich aus den in Verfahrensschritt (II) gebildeten Tropfen Polyarylethersulfon-Polymere (P) in partikularer Form. Diese Polymerpartikel weisen im Allgemeinen eine Kugelform auf. Die mittlere Teilchengröße der Polymerpartikel liegt im Allgemeinen im Bereich von 100 µm bis 10 mm, vorzugsweise im Bereich von 300 µm bis 5 mm und insbesondere bevorzugt im Bereich von 400 µm bis 4 mm.

Verfahrensschritte (II) und (III) werden im Allgemeinen unter atmosphärischem Druck durchgeführt. Es ist möglich, die Verfahrensschritte (II) und (III) unter Schutzgasatmosphäre durchzuführen. Als Schutzgase eignen sich beispielsweise Stickstoff oder Edelgase, bevorzugt ist Argon.

### (IV) Abtrennen des Polyarylethersulfon-Polymers (P) in partikularer Form

In Verfahrensschritt (III) wird das Polyarylethersulfon-Polymer (P) in partikularer Form erhalten. In Verfahrensschritt (IV) wird das Polyarylethersulfon-Polymer (P) abgetrennt. Bevorzugt wird das Polyarylethersulfon-Polymer (P) in Verfahrensschritt (IV) in partikularer Form abgetrennt. Gegenstand der vorliegenden Erfindung ist somit auch ein Verfahren zur Herstellung von Polyarylethersulfon-Polymeren (P) in partikularer Form.

Die Abtrennung des Polyarylethersulfon-Polymers (P) kann dabei direkt aus dem Fällbad (F) erfolgen. Verfahren zum Abtrennen von partikularen Polymeren sind dem Fachmann prinzipiell bekannt. Die Abtrennung des Polyarylethersulfon-Polymers (P) in partikularer Form kann beispielsweise durch Filtration oder Zentrifugieren erfolgen.

In einer bevorzugten Ausführungsform wird das in Verfahrensschritt (III) erhaltene Polyarylethersulfon-Polymer (P) vor der Abtrennung gemäß Verfahrensschritt (IV) einem Extraktionsschritt unterworfen. Hierzu wird das gemäß Verfahrensschritt (III) erhaltene Polyarylethersulfon-Polymer (P) in partikularer Form in eine Extraktionsstufe überführt. Das gemäß Verfahrensschritt (III) erhaltene Polyarylethersulfon-Polymer (P) kann hierzu aus dem Fällbad (F) abgetrennt und in die Extraktionsstufe überführt werden. Es ist auch möglich, ein bewegtes Fällbad (F) einzusetzen. In dieser Ausführungsform dient das in Verfahrensschritt (III) eingesetzte Fällbad (F) gleichzeitig als Transportmittel. Das Lösungsmittel des Fällbads (F) transportiert dabei das partikulare Polyarylethersulfon-Polymer (P) in die Extraktionsstufe.

In der Extraktionsstufe wird das Polyarylethersulfon-Polymer (P) einer Extraktion mit einem Extraktionsmittel (E) unterworfen. Als Extraktionsmittel (E) wird hierzu bevorzugt ein Extraktionsmittel (E) eingesetzt, das Wasser enthält. Bevorzugt enthält das Extraktionsmittel (E) mindestens 90 % Wasser, besonders bevorzugt mindestens 95 % Wasser, insbesondere besteht das Extraktionsmittel (E) aus Wasser. Als Wasser wird bevorzugt voll entsalztes Wasser (VE-Wasser) eingesetzt.

Das Extraktionsmittel (E) weist während der Extraktion vorzugsweise Temperaturen im Bereich von 50 bis 100 °C auf, bevorzugt Temperaturen im Bereich von 80 bis 90 °C. Die Extraktion der Polyarylethersulfon-Polymere (P) in partikularer Form kann dabei beispielsweise im Gegenstrom erfolgen. Die Extraktion von Polymerpartikeln ist dem Fachmann prinzipiell bekannt und beispielsweise in EP 2 305 740 bzw. DE 36 44 464 beschrieben.

Nach der Extraktion wird das extrahierte Polyarylethersulfon-Polymer (P) in partikularer Form gemäß Verfahrensschritt (IV) abgetrennt. Dies kann, wie vorstehend beschrieben, beispielsweise durch Filtration oder Zentrifugieren erfolgen. Bevorzugt erfolgt die Abtrennung durch Filtration.

Das gemäß Verfahrensschritt (IV) abgetrennte Polyarylethersulfon-Polymer (P) kann nachfolgend weiteren Aufarbeitungsschritten unterzogen werden. Bevorzugt wird das gemäß Verfahrensschritt (IV) erhaltene Polyarylethersulfon-Polymer (P) einem Trocknungsschritt unterzogen, um das in den Polyarylethersulfon-Polymeren (P) enthaltene Wasser zu entfernen. Der Trocknungsschritt wird dabei bevorzugt bei erhöhten Temperaturen, beispielsweise bei Temperaturen im Bereich von 50 bis 300 °C, bevorzugt im Bereich von 100 bis 200°C, durchgeführt. Die Trocknung kann gegebenenfalls unter vermindertem Druck durchgeführt werden.

Der Trocknungsschritt wird im Allgemeinen so durchgeführt, bis das Polyarylethersulfon-Polymer (P) einen Wassergehalt von weniger als 0,1 Gew.-% aufweist, bezogen auf das Gesamtgewicht des Polyarylethersulfon-Polymers (P) in partikularer Form.

### Polyarylethersulfon-Polymer (P)

Es wurde überraschend festgestellt, dass mit dem erfindungsgemäßen Verfahren Polyarylethersulfon-Polymere (P) erhalten werden, die einen geringen Gehalt an aprotischen polaren Lösungsmitteln (L) aufweisen. Die nach dem erfindungsgemäßen Verfahren erhältlichen Polyarylethersulfon-Polymere (P) weisen einen Gehalt an aprotischen polaren Lösungsmitteln (L) von weniger als 300 Gew.-ppm, bevorzugt weniger als 250 Gew.-ppm, besonders bevorzugt von weniger als 150 Gew.-ppm, mehr bevorzugt von weniger als 100 Gew.-ppm und insbesondere bevorzugt von weniger als 70 Gew.-ppm auf, jeweils bezogen auf das Gesamtgewicht des Polyarylethersulfon-Polymers (P). Die erfindungsgemäß erhaltenen Polyarylethersulfon-Polymere (P) weisen im Allgemeinen einen Gehalt an aprotischem polaren Lösungsmittel (L) von mindestens 1 Gew.-ppm, bevorzugt mindestens 5 Gew.-ppm und besonders bevorzugt von mindestens 10 Gew.-ppm auf, jeweils bezogen auf das Gesamtgewicht des Polyarylethersulfon-Polymers (P).

Die nach den im Stand der Technik beschriebenen Verfahren erhältlichen Polyarylethersulfon-Polymere (P) weisen deutlich höhere Konzentrationen an aprotischem polaren Lösungsmittel auf. In handelsüblichen Verkaufsprodukten ist teilweise ein Restgehalt an aprotischem polaren Lösungsmittel im Bereich von 2000 Gew.-ppm enthalten.

Hierin beschrieben ist auch ein Polyarylethersulfon-Polymer (P), das einen Gehalt an aprotischem polaren Lösungsmittel (L) von weniger als 300 Gew.-ppm, bevorzugt von weniger als 250 Gew.-ppm, besonders bevorzugt von weniger als 150 Gew.-ppm, mehr bevorzugt von weniger als 100 Gew.-ppm und insbesondere bevorzugt von weniger als 70 Gew.-ppm bezogen auf das Gesamtgewicht des Polyarylethersulfon-Polymers (P) aufweist.

Hierin beschrieben ist auch ein Polyarylethersulfon-Polymer (P), das nach dem erfindungsgemäßen Verfahren erhältlich ist.

Hierin beschrieben ist somit auch ein Polyarylethersulfon-Polymer (P), das einen Gehalt an Sulfolan von weniger als 300 Gew.-ppm, bevorzugt weniger als 250 Gew.-ppm, besonders bevorzugt von weniger als 150 Gew.-ppm, mehr bevorzugt von weniger als 100 Gew.-ppm und insbesondere bevorzugt von weniger als 70 Gew.-ppm, bezogen auf das Gesamtgewicht des Polyarylethersulfon-Polymers (P) aufweist.

Darüber hinaus wurde überraschend festgestellt, dass für den Fall, dass die Bereitstellung der Lösung (PL) durch die Verfahrensschritte (i), (ii) bzw. (iii) erfolgt, Polyarylethersulfon-Polymere (P) erhalten werden, die einen geringen Gehalt an polymergebundenem Chlor aufweisen.

Ebenfalls hierin beschrieben sind Polyarylethersulfon-Polymere (P), welche gemäß dem erfindungsgemäßen Verfahren erhältlich sind, mit einem Gehalt an polymergebundenem Chlor von weniger als 400 Gew.-ppm, insbesondere weniger als 300 Gew.-ppm, besonders bevorzugt weniger als 200 Gew.-ppm, jeweils bezogen auf das Gesamtgewicht des Polyarylethersulfon-Polymers (P).
Die Polyarylethersulfon-Polymere (P) weisen vorzugsweise einen Gehalt an polymergebundenem Chlor von weniger als 400 Gew.-ppm, insbesondere weniger als 300 Gew.-ppm, besonders bevorzugt weniger als 200 Gew.-ppm auf. Die untere Grenze des Gehaltes an polymergebundenem Chlor beträgt verfahrensbedingt üblicherweise mindestens 10Gew.-ppm, insbesondere mindestens 20 Gew.-ppm, jeweils bezogen auf das Gesamtgewicht des Polyarylethersulfon-Polymers (P).

Der Chlorgehalt des erhältlichen Polyarylethersulfon-Polymers (P) entspricht dem Gehalt an Chlorendgruppen und wird im Rahmen der vorliegenden Erfindung mittels Atomspektroskopie bestimmt. Der Gehalt an polymergebundenem Chlor bezieht sich im Rahmen der vorliegenden Erfindung grundsätzlich auf den Gewichtsanteil und kann alternativ in mg pro kg Einwaage des Polyarylethersulfon-Polymers (P) angegeben werden.

Die Polyarylethersulfon-Polymere (P), welche nach dem erfindungsgemäßen Verfahren erhältlich sind, weisen besonders bevorzugt einen Gehalt an polymergebundenem Chlor von weniger als 400 Gew.-ppm und gleichzeitig einen Anteil an Restlösungsmittel von weniger als 300 Gew.-ppm auf, jeweils bezogen auf das Gesamtgewicht des Polyarylethersulfon-Polymers (P).

Die Polyarylethersulfon-Polymere (P) zeichnen sich darüber hinaus durch eine Reißdehnung im Zugversuch von mehr als 50 % aus.

Die folgenden Beispiele erläutern die Erfindung näher, ohne sie einzuschränken.

### Beispiele

Die Viskositätszahl der Polyarylethersulfon-Polymere (P) wird in 1%-iger Lösung von N-Methylpyrrolidon bei 25 °C bestimmt.

Die Isolierung der Polyarylethersulfon-Polymere (P) erfolgte durch Zertropfung einer Lösung (PL), welche über einen Thermostaten temperiert wurde. Als Fällbad (F) wurde VE-Wasser (20 °C) (Fallhöhe 0,5 m, Durchsatz ca. 2,5 L/h) eingesetzt. Die erhaltenen Polyarylethersulfon-Polymere (P) wurden anschließend bei 85 °C für 20 h mit Wasser extrahiert (Wasserdurchsatz 160 L/h). Danach wurden die Polyarylethersulfon-Polymere (P) in partikularer Form bei 150 °C auf eine Restfeuchte von weniger als 0,1 Gew.-% getrocknet.

Die volumengemittelte Partikelgröße des verwendeten Kaliumkarbonats wurde mit einem Mastersizer 2000 der Firma Malvern an einer Suspension der Partikel in Chlorbenzol/Sulfolan (60/40) bestimmt.

Der Sulfolan-Anteil der Polyarylethersulfon-Polymere (P) in partikularer Form wurde mittels 1 H-NMR nach Eichung bestimmt. Dabei wurden die Signale des Sulfolans bei 2,2 und 3,1 ppm verwendet.

Die erhaltenen Polyarylethersulfon-Polymere (P) wurden bei einer Massetemperatur von 370 °C in einem Zweischneckenextruder (PTW 18) granuliert. Die Verarbeitung zu Probekörpern erfolgte bei 375 °C Massetemperatur und 160 °C Werkzeugtemperatur.

Die Eigenfarbe der Polyarylethersulfon-Polymere (P) wurde durch Messung des Yellowness Index (YI) (ASTM D1925) an spritzgegossenen Platten (375 °C Massetemperatur; 160 °C Werkzeugtemperatur) der Dicke 2 mm bestimmt.

Der CI-Anteil (polymergebundenes Chlor) der Proben wurde durch Atomspektroskopie bestimmt.

Die verwendeten Monomere (4,4'-Dichlordiphenylsulfon, 4,4'-Dihydroxybiphenyl) hatten eine Reinheit von mehr als 99,5 %.

Das verwendete Kaliumcarbonat wies eine Partikelgröße D[4,3] von 30,2 µm auf.

### Lösung 1

Polyarylethersulfon-Polymere (P), erhalten durch nucleophile aromatische Polykondensation von 574,30 g (2,000 mol) 4,4'-Dichlordiphenylsulfon, 372,40 g (2,000 mol) 4,4'-Dihydroxybiphenyl, unter Einwirkung von 290,24 g (2,10 mol) Kaliumkarbonat (Pottasche, Partikelgröße 30,2 µm) in 1538 ml Sulfolan. Diese Mischung wird 1 Stunde bei 210 °C gehalten. Danach wird der Ansatz durch Zugabe von 500 ml Sulfolan verdünnt. Die Suspension wurde dann bei 180 °C 30 Minuten mit Methylchlorid (15 L/h) umgesetzt. Danach wird die Suspension mit 1300 ml 100 °C warmem Sulfolan verdünnt und in einen beheizten Druckfilter (120 °C) überführt. Die Lösung (PL) wird in einen auf 80 °C beheizten Behälter filtriert.

Aus diesem Behälter wird die Lösung (PL) in eine Düse gepumpt, so dass kleine Tropfen entstehen, welche in einen gerührten Behälter mit dem Fällbad (F) (Wasser) fallen. Dabei entsteht Polyarylethersulfon-Polymer (P) in partikularer Form (Perlen), welches nach dem Abtrennen 20 h mit 85 °C heißem Wasser (160 L/h) extrahiert wurde. Nach Abtropfen des Wassers werden die Perlen bei 150 °C im Trockenschrank auf eine Restfeuchte < 0,1 Gew.-% getrocknet.

Die Temperatur der Lösung (PL) beim Zertropfen wurde variiert. Die bei der Charakterisierung erhaltenen Messwerte sind in Tabelle 1 aufgeführt.

### Lösung 2

Polyarylethersulfon-Polymere (P), erhalten durch nucleophile aromatische Polykondensation von 574,30 g (2,000 mol) 4,4'-Dichlordiphenylsulfon, 379,87 g (2,040 mol) 4,4'-Dihydroxybiphenyl, unter Einwirkung von 290,24 g (2,10 mol) Kaliumkarbonat (Pottasche, Partikelgröße 30,2 µm) in 1538 ml Sulfolan. Diese Mischung wird 2 Stunden bei 210 °C gehalten. Danach wird der Ansatz durch Zugabe von 500 ml Sulfolan verdünnt. Die Suspension wurde dann bei 180 °C 30 Minuten mit Methylchlorid (15 l/h) umgesetzt. Danach wird die Suspension mit 1300 ml 100 °C warmem Sulfolan verdünnt und in einen beheizten Druckfilter (120 °C) überführt. Die Lösung (PL) wird in einen auf 80 °C beheizten Behälter filtriert.

Aus diesem Behälter wird die Lösung (PL) in eine Düse gepumpt, so dass kleine Tropfen entstehen, welche in einen gerührten Behälter mit dem Fällbad (F) (Wasser) fallen. Dabei entsteht Polyarylethersulfon-Polymer (P) in partikularer Form (Perlen), welches nach dem Abtrennen 20 h mit 85 °C heißem Wasser (160 L/h) extrahiert wurde. Nach Abtropfen des Wassers werden die Perlen bei 150°C im Trockenschrank auf eine Restfeuchte < 0,1 Gew.-% getrocknet.

Die Temperatur der Lösung (PL) beim Zertropfen wurde variiert. Die bei der Charakterisierung erhaltenen Messwerte sind in Tabelle 1 aufgeführt.

### Lösung 3

Polyarylethersulfon-Polymere (P), erhalten durch nucleophile aromatische Polykondensation von 574,30 g (2,000 mol) 4,4'-Dichlordiphenylsulfon, 379,87 g (2,040 mol) 4,4'-Dihydroxybiphenyl, unter Einwirkung von 290,24 g (2,10 mol) Kaliumkarbonat (Partikelgröße 30,2 µm) in 1538 ml Sulfolan. Diese Mischung wird 2 Stunden bei 210 °C gehalten. Dann wurde eine Mischung aus 100 ml Sulfolan/0,78 g NaOH/0,78 ml VE-Wasser zugegeben und weitere 30 Minuten gerührt. Danach wird der Ansatz durch Zugabe von 500 ml Sulfolan verdünnt. Die Suspension wurde dann bei 180 °C 30 Minuten mit Methylchlorid (15 L/h) umgesetzt. Danach wird die Suspension mit 1300 ml 100 °C warmem Sulfolan verdünnt und in einen beheizten Druckfilter (120 °C) überführt. Die Lösung (PL) wird in einen auf 80 °C beheizten Behälter filtriert.

Aus diesem Behälter wird die Lösung (PL) in eine Düse gepumpt, so dass kleine Tropfen entstehen, welche in einen gerührten Behälter mit dem Fällbad (F) (Wasser) fallen. Dabei entsteht Polyarylethersulfon-Polymer (P) in partikularer Form, welches nach dem Abtrennen 20 h mit 85 °C heißem Wasser (160 L/h) extrahiert wurde. Nach Abtropfen des Wassers werden die Perlen bei 150 °C im Trockenschrank auf eine Restfeuchte < 0,1 Gew.-% getrocknet.

Die Temperatur der Lösung (PL) beim Zertropfen wurde variiert. Die bei der Charakterisierung erhaltenen Messwerte sind in Tabelle 1 aufgeführt.

### Lösung 4

Polyarylethersulfon-Polymer (P), erhalten durch nucleophile aromatische Polykondensation von 586,75 g (2,044 mol) 4,4'-Dichlordiphenylsulfon, 372,42 g (2,00 mol) 4,4'-Dihydroxybiphenyl, unter Einwirkung von 286,09 g (2,07 mol) Kaliumkarbonat (Partikelgröße 61 µm) in 2100 ml NMP. Diese Mischung wird 6 Stunden bei 190°C gehalten. Danach wird der Ansatz durch Zugabe von 1200 ml NMP verdünnt. Die Suspension wurde dann bei 130°C 1 Stunde mit Methylchlorid (15 l/h) umgesetzt. Nach Abkühlen auf 80°C wird die Suspension abgelassen, die festen Bestandteile werden durch Filtration abgetrennt, unter Erhalt der Lösung (PL).

Aus diesem Behälter wird die Lösung (PL) in eine Düse gepumpt, so dass kleine Tropfen entstehen, welche in einen gerührten Behälter mit dem Fällbad (F) (Wasser) fallen. Dabei entsteht Polyarylethersulfon-Polymer (P) in partikularer Form (Perlen), welches nach dem Abtrennen 20 h mit 85°C heißem Wasser (160 L/h) extrahiert wurde. Nach Abtropfen des Wassers werden die Perlen bei 150°C im Trockenschrank auf eine Restfeuchte < 0,1 Gew.-% getrocknet.

Die Temperatur der Lösung beim Zertropfen wurde variiert. Die bei der Charakterisierung erhaltenen Messwerte sind in Tabelle 1 aufgeführt.

### Lösung 5

Polyarylethersulfon-Polymer (P), erhalten durch nucleophile aromatische Polykondensation von 574,30 g (2,00 mol) 4,4'-Dichlordiphenylsulfon, 500,56 g (2,00 mol) 4,4'-Dihydroxydiphenylsulfon, unter Einwirkung von 286,09 g (2,07 mol) Kaliumkarbonat (Partikelgröße 30 µm) in 2100 ml NEP.

Diese Mischung wird 6 Stunden bei 190°C gehalten. Danach wird der Ansatz durch Zugabe von 1200 ml NEP verdünnt. Die Suspension wurde dann bei 130°C 1 Stunde mit Methylchlorid (15 l/h) umgesetzt. Nach Abkühlen auf 80°C wird die Suspension abgelassen, die festen Bestandteile werden durch Filtration abgetrennt, unter Erhalt der Lösung (PL).

Aus diesem Behälter wird die Lösung (PL) in eine Düse gepumpt, so dass kleine Tropfen entstehen, welche in einen gerührten Behälter mit Wasser fallen. Dabei entsteht Polyarylethersulfon-Polymer (P) in partikularer Form (Perlen), welches nach dem Abtrennen 20 h mit 85°C heißem Wasser (160 L/h) extrahiert wurde. Nach Abtropfen des Wassers werden die Perlen bei 150°C im Trockenschrank auf eine Restfeuchte < 0,1 Gew.-% getrocknet.

Die Temperatur der Lösung beim Zertropfen wurde variiert. Die bei der Charakterisierung erhaltenen Messwerte sind in Tabelle 1 aufgeführt.

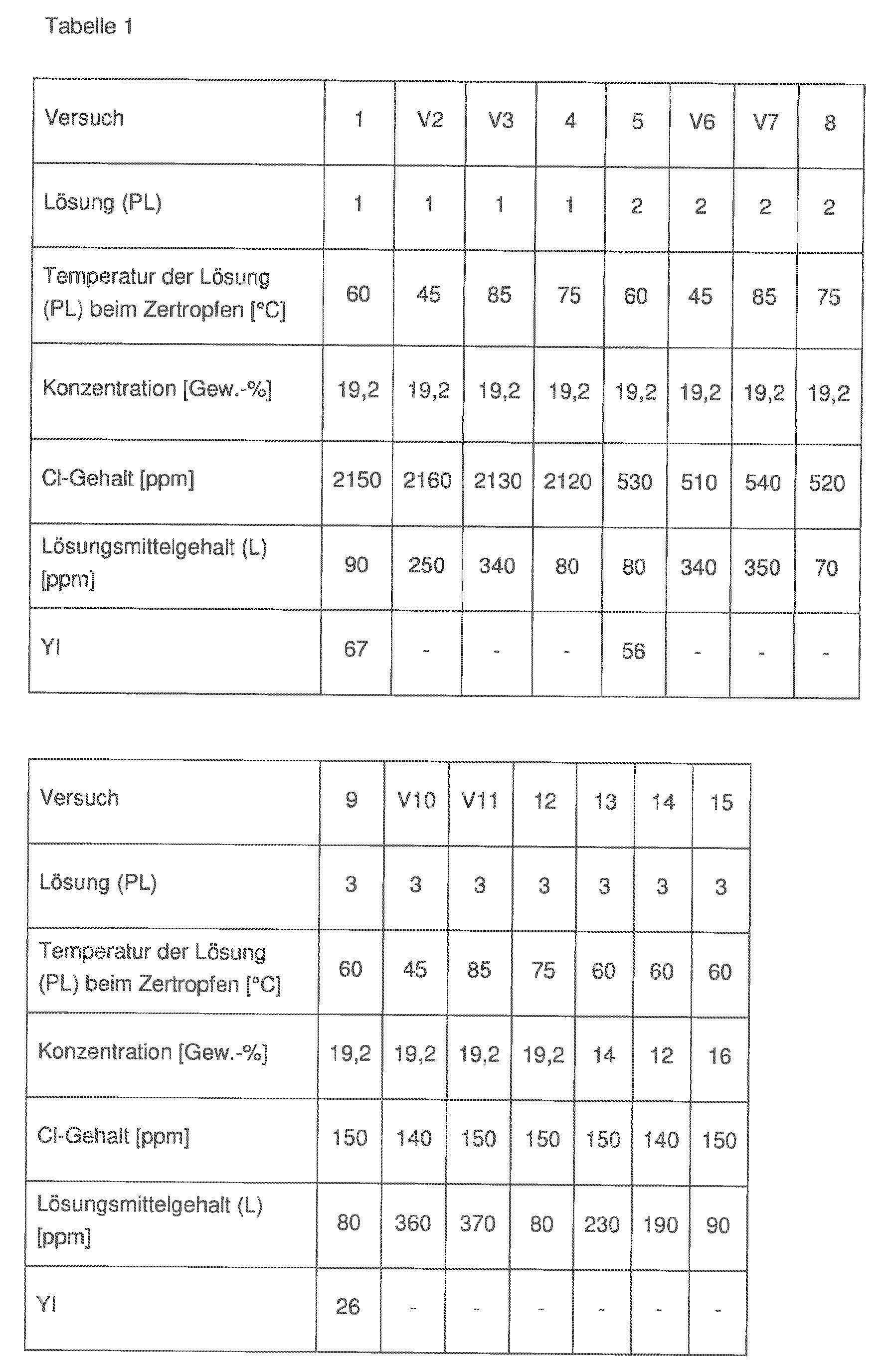

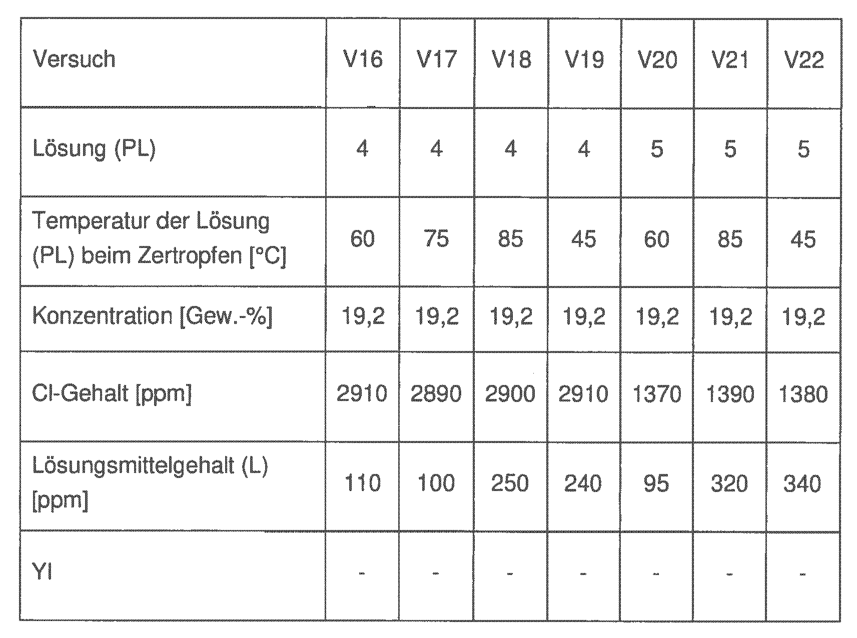

Die Vergleichswerte für Radel^{®} R-5000 sind:

| | |
|---|---|
| CI-Gehalt [ppm] | 2900 |
| Lösungsmittel-Gehalt (L) [ppm] | 2000 |
| YI | 67 |

Die erfindungsgemäßen Formmassen zeichnen sich durch eine Kombination aus sehr geringem CI-Anteil, geringem Sulfolananteil und guter Eigenfarbe aus.

## Patentansprüche

1. Verfahren zur Herstellung eines Polyarylethersulfon-Polymers (P) umfassend die folgenden Schritte:
(I) Bereitstellen einer Lösung (PL), die das Polyarylethersulfon-Polymer (P) und ein aprotisches polares Lösungsmittel (L) enthält,
(II) Vereinzeln der Lösung (PL) zu Tropfen,
(III) Überführen der Tropfen in ein Fällbad (F), das Wasser enthält, wodurch das Polyarylethersulfon-Polymer (P) in partikularer Form erhalten wird, und
(IV) Abtrennen des Polyarylethersulfon-Polymers (P)
wobei die Lösung (PL) in Verfahrensschritt (II) eine Temperatur im Bereich von 50 bis < 80°C aufweist, wobei die Bereitstellung der Lösung (PL) gemäß Verfahrensschritt (I):
(i) die Umsetzung einer Komponente (a1), bestehend aus mindestens einer aromatischen Dihydroxyverbindung und der Komponente (a2), bestehend aus mindestens einer aromatischen Sulfonverbindung mit zwei Halogensubstituenten, wobei die Komponente (a1) 4,4'-Dihydroxybiphenyl umfasst und wobei das molare Verhältnis der Komponenten (a1) zu (a2) im Bereich von 1,005 bis 1,2 liegt und wobei die Umsetzung in einem aprotischen polaren Lösungsmittel (L) in Gegenwart einer Karbonatverbindung (C) durchgeführt wird, wodurch die Lösung (PL) erhalten wird, umfasst,
wobei die Komponente (a1) mindestens 80 Gew.-% 4,4'-Dihydroxybiphenyl enthält, bezogen auf das Gesamtgewicht der Komponente (a1),
wobei die Komponente (a2) mindestens ein Dihalogendiphenylsulfon ist, ausgewählt aus der Gruppe bestehend aus 4,4'-Dichlordiphenylsulfon und 4,4'-Difluordiphenylsulfon,
wobei das aprotische polare Lösungsmittel (L) Sulfolan ist, wobei das Fällbad (F) mindestens 70 Gew.-% Wasser enthält, bezogen auf das Gesamtgewicht der flüssigen Bestandteile des Fällbades und
wobei in Verfahrensschritt (II) Tropfen mit einer Größe im Bereich von 0,5 bis 4 mm hergestellt werden.

2. Verfahren gemäß Anspruch 1, **dadurch gekennzeichnet, dass** die Lösung (PL) 10 bis 35 Gew.-% des Polyarylethersulfon-Polymers (P) enthält, bezogen auf das Gesamtgewicht der Lösung (PL).

3. Verfahren gemäß Anspruch 1 oder 2, **dadurch gekennzeichnet, dass** das Fällbad (F) eine Temperatur im Bereich von 5 bis 50 °C aufweist.

4. Verfahren gemäß einem der Ansprüche 1 bis 3, **dadurch gekennzeichnet, dass** die Bereitstellung der Lösung (PL) gemäß Verfahrensschritt (I) die folgenden Schritte umfasst:
(i) Umsetzung einer Komponente (a1), bestehend aus mindestens einer aromatischen Dihydroxyverbindung und der Komponente (a2), bestehend aus mindestens einer aromatischen Sulfonverbindung mit zwei Halogensubstituenten, wobei die Komponente (a1) 4,4'-Dihydroxybiphenyl umfasst und wobei das molare Verhältnis der Komponente (a1) zu (a2) im Bereich von 1,005 bis 1,2 liegt und wobei die Umsetzung in einem aprotischen polaren Lösungsmittel (L) in Gegenwart einer Karbonatverbindung (C) durchgeführt wird, wodurch ein Polymer (Pr) erhalten wird und
(ii) Umsetzen des Polymers (Pr) mit einem Alkylchlorid, wodurch die Lösung (PL) erhalten wird.

5. Verfahren gemäß einem der Ansprüche 1 bis 4, **dadurch gekennzeichnet, dass** die in Verfahrensschritt (I) bereitgestellte Lösung (PL) in Verfahrensschritt (II) mindestens einer Düse zugeführt wird und nach Austritt aus der Düse durch Strahlzerfall zu Tropfen vereinzelt wird.

## Claims

1. A process for the production of a polyaryl ether sulfone polymer (P), comprising the following steps:
(I) provision of a solution (PL) which comprises the polyaryl ether sulfone polymer (P) and comprises an aprotic polar solvent (L),
(II) separation of the solution (PL) into droplets,
(III) transfer of the droplets into a precipitation bath (F) which comprises water, with the result that the polyaryl ether sulfone polymer (P) is obtained in the form of particles, and
(IV) isolation of the polyaryl ether sulfone polymer (P)
where the temperature of the solution (PL) in step (II) is in the range from 50 to < 80°C, wherein the provision of the solution (PL) according to step (I) comprises:
(i) the reaction of a component (a1), composed of at least one aromatic dihydroxy compound, and of component (a2), composed of at least one aromatic sulfone compound having two halogen substituents, where component (a1) comprises 4,4'-dihydroxybiphenyl and where the molar ratio of components (a1) to (a2) is in the range from 1.005 to 1.2, and where the reaction is carried out in an aprotic polar solvent (L) in the presence of a carbonate compound (C), with the result that the solution (PL) is obtained,
wherein component (a1) comprises at least 80% by weight of 4,4-dihydroxybiphenyl, based on the total weight of component (a1),
wherein component (a2) is at least one dihalodiphenyl sulfone selected from the group consisting of 4,4'-dichlorodiphenyl sulfone and 4,4'-difluorodiphenyl sulfone,
wherein the aprotic solvent (L) is sulfolane, wherein precipitation bath (F) contains at least 70% of water, based on the total weight of the liquid components of the precipitation bath, and
wherein in step (II) droplets of a size in the range from 0.5 to 4 mm are produced.

2. The process according to claim 1, wherein the solution (PL) comprises from 10 to 35% by weight of the polyaryl ether sulfone polymer (P), based on the total weight of the solution (PL).

3. The process according to claim 1 or 2, wherein the temperature of the precipitation bath (F) is in the range from 5 to 50°C.

4. The process according to any of claims 1 to 3, wherein the provision of the solution (PL) according to step (I) comprises the following steps:
(i) the reaction of a component (a1), composed of at least one aromatic dihydroxy compound, and of component (a2), composed of at least one aromatic sulfone compound having two halogen substituents, where component (a1) comprises 4,4'-dihydroxybiphenyl and where the molar ratio of components (a1) to (a2) is in the range from 1.005 to 1.2, and where the reaction is carried out in an aprotic polar solvent (L) in the presence of a carbonate compound (C), with the result that a polymer (Pr) is obtained, and
(ii) reaction of the polymer (Pr) with an alkyl chloride, with the result that the solution (PL) is obtained.

5. The process according to any of claims 1 to 4, wherein the solution provided in step (I) (PL) is introduced in step (II) into at least one nozzle and, after discharge from the nozzle, is separated into droplets via disintegration of a jet.

## Revendications

1. Procédé de fabrication d'un polymère de polyaryléthersulfone (P), comprenant les étapes suivantes:
(I) la préparation d'une solution (PL), qui contient le polymère de polyaryléthersulfone (P) et un solvant aprotique polaire (L),
(II) la séparation de la solution (PL) en gouttes,
(III) le transfert des gouttes dans un bain de précipitation (F), qui contient de l'eau, le polymère de polyaryléthersulfone (P) étant ainsi obtenu sous forme particulaire, et
(IV) la séparation du polymère de polyaryléthersulfone (P),
la solution (PL) présentant à l'étape de procédé (II) une température dans la plage allant de 50 à < 80 °C, la préparation de la solution (PL) selon l'étape de procédé (I) comprenant:
(i) la mise en réaction d'un composant (a1), constitué d'au moins un composé dihydroxy aromatique, et du composant (a2), constitué d'au moins un composé de sulfone aromatique contenant deux substituants halogène, le composant (a1) comprenant le 4,4'-dihydroxybiphényle et le rapport molaire entre les composants (a1) et (a2) se situant dans la plage allant de 1,005 à 1,2, et la réaction étant réalisée dans un solvant aprotique polaire (L) en présence d'un composé de carbonate (C), la solution (PL) étant ainsi obtenue,
le composant (a1) contenant au moins 80 % en poids du 4,4'-dihydroxybiphényle, par rapport au poids total du composant (a1),
le composant (a1) étant au moins un dihalogénodiphénylsulfone choisi dans le groupe constitué par la 4,4'-dichlorodiphénylsulfone et la 4,4'-difluorodiphénylsulfone,
le solvant aprotique polaire (L) étant sulfolane, le bain de précipitation (F) contenant au moins 70 % en poids de l'eau, par rapport au poids total des constituants liquides du bain de précipitation, et
des gouttes d'une taille dans la plage allant de 0,5 à 4 mm étant produites à l'étape de procédé (II).

2. Procédé selon la revendication 1, **caractérisé en ce que** la solution (PL) contient 10 à 35 % en poids du polymère de polyaryléthersulfone (P), par rapport au poids total de la solution (PL).

3. Procédé selon la revendication 1 ou 2, **caractérisé en ce que** le bain de précipitation (F) présente une température dans la plage allant de 5 à 50 °C.

4. Procédé selon l'une quelconque des revendications 1 à 3, **caractérisé en ce que** la préparation de la solution (PL) selon l'étape de procédé (I) comprend les étapes suivantes:
(i) la mise en réaction d'un composant (a1), constitué d'au moins un composé dihydroxy aromatique, et du composant (a2), constitué d'au moins un composé de sulfone aromatique contenant deux substituants halogène, le composant (a1) comprenant le 4,4'-dihydroxybiphényle et le rapport molaire entre les composants (a1) et (a2) se situant dans la plage allant de 1,005 à 1,2, et la réaction étant réalisée dans un solvant aprotique polaire (L) en présence d'un composé de carbonate (C), un polymère (Pr) étant ainsi obtenu, et
(ii) la mise en réaction du polymère (Pr) avec un chlorure d'alkyle, la solution (PL) étant ainsi obtenue.

5. Procédé selon l'une quelconque des revendications 1 à 4, **caractérisé en ce que** la solution (PL) préparée à l'étape de procédé (I) est introduite à l'étape de procédé (II) dans au moins une buse, et divisée à la sortie de la buse par désintégration du jet en gouttes.
